(19) Europäisches Patentamt / European Patent Office / Office européen des brevets

(11) **EP 2 077 296 B1**

(12) **EUROPEAN PATENT SPECIFICATION**

(45) Date of publication and mention
of the grant of the patent:
**20.10.2010 Bulletin 2010/42**

(51) Int Cl.:
*C08L 23/06* *(2006.01)*          *C08L 23/08* *(2006.01)*
*C09D 123/06* *(2006.01)*        *C09D 123/08* *(2006.01)*

(21) Application number: **08100152.1**

(22) Date of filing: **07.01.2008**

(54) **Extrusion Coating Polyethylene Composition**

Extrusionsbeschichtung einer Polyethylenzusammensetzung

Composition de polyéthylène de revêtement par extrusion

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**08.07.2009 Bulletin 2009/28**

(73) Proprietor: **Borealis Technology OY
06101 Porvoo (FI)**

(72) Inventors:
• **Nummila-Pakarinen, Auli
06100, Porvoo (FI)**

• **Sainio, Markku
06100, Porvoo (FI)**
• **Laiho, Erkki
00280, Helsinki (FI)**

(74) Representative: **Lux, Berthold et al
Maiwald Patentanwalts GmbH
Elisenhof
Elisenstraße 3
80335 München (DE)**

(56) References cited:
**EP-A- 1 555 292       EP-A- 1 591 475
EP-A- 1 674 490       EP-A- 1 777 238
WO-A-2005/002744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

The present invention deals with polyethylene compositions to be used in extrusion coating. In extrusion coating a thin film of polymer melt is extruded through a flat die and pressed onto a moving substrate. The substrate may be, among others, paper, paperboard, a plastic film, a metal film or sheet. The line speed in modern equipment can be very high, up to 1000 m/min or even more.

The high line speed sets heavy requirements for the material.

A crucial point is the neck-in, which is, in short, the difference between the width of the extrusion die and the width of the coating on the substrates. A neck-in as low as possible is preferred, since a low neck-in leads to a low amount of wasted substrate material, as the uncoated part needs to be cut off and discarded.

In addition the draw down, the ability of a melt to be drawn from the die to thin films without breaking and the maximum line speed at which the polymer web breaks, is an important factor in extrusion coatings.

Field of the Invention

The present invention deals with polymer compositions to be used in extrusion coating processes.

The compositions show improved processability and can be extrusion coated on different substrates at a high line speed, with low neck-in and high draw down. Furthermore the compositions have various advantageous properties, such as good sealing properties, good water vapour barrier properties (low water vapour transmission rate (WVTR)), excellent environmental stress cracking resistance (ESCR), improved adhesion to oriented polypropylene (OPP) films and good adhesion to Al-laminate.

Particularly the invention relates to compositions comprising a special low density ethylene polymer, a bimodal metallocene-based linear low density polyethylene terpolymer and a non-thermoplastic filler.

State of the Art

Low density polyethylene (LDPE), conventionally made in a high pressure radical process, preferably in an autoclave reactor, has been used in extrusion coating for many years. In extrusion coating, the polymer resin is melted and formed into thin hot film, which is normally coated onto a moving, flat substrate such as paper, paperboard, metal foil or plastic film. The coated substrate then passes between a set of counter-rotating rollers, which press the coating onto the substrate to ensure complete contact and adhesion. Polymers used in extrusion coating need to possess certain properties to make them useful as coating. In this regard LDPE's do not possess the ideal mechanical properties required for extrusion coating since they lack the necessary toughness and abrasion resistance. It is therefore known to blend LDPE's with other olefin polymer grades to improve mechanical properties. Hence LDPE has been combined with higher density PE, e.g. medium or high density PE (MDPE or HDPE) or linear low density PEs (LLDPEs) to improve mechanical properties. For example a small amount of LDPE (5 to 30 wt%) can be added to LLDPE to improve processability in an extrusion coating composition. However when the content of LDPE increases in the composition, then the beneficial properties of the linear polymer, e.g. environmental stress cracking resistance, barrier properties, sealing properties, are soon diluted or lost. On the other hand if the LDPE content is too low then the blend may not have sufficient processability. The problem with such low LDPE content blends is that whilst they have better processability than an LLDPE alone, they may not be extrudable or drawn down at high take-off rates, but may rather show instabilities and/or excessive neck-in. There is therefore a trade off between good mechanical properties and good processability.

There remains a need therefore to devise further PE polymer compositions suitable for extrusion coating which provide both good mechanical and processing properties.

The following documents, amongst others, propose special blends for extrusion coating:

WO 2005/002744 discloses for example bimodal metallocene-based linear low density polyethylene terpolymers (bimodal mLLDPE terpolymers) for extrusion coating. According to the Examples and the description of WO 2005/002744 these bimodal mLLDPE terpolymers can be blended especially with LDPE, said LDPE preferably having a melt index of at least 6.5 g/10 min. The LDPE used was a polymer manufactured and sold by Borealis under trade name CA8200 and had $MFR_2$ of 7.5 g/10 min and density of 920 kg/m$^3$.

The blends show a combination between good sealing properties and processability.

EP 1 777 238 discloses a special LDPE having a melt index $MFR_2$ of 2.5 to 10.0 g/10 min, especially from 2.5 to 6.5 g/10 min and a density of 910 to 935 kg/m$^3$. In addition this special LDPE has a dynamic viscosity $\eta_{0.05}$ at a shear rate of 0.05 rad/s and a dynamic viscosity $\eta_{300}$ rad/s which satisfy the following relationship:

$$\eta_{300} \leq 108 \text{ Pa*s} + 0.0253* \eta_{0.05}$$

and/or
a phase shift $\delta_{0.5}$ at a frequency of 0.5 rad/s and a phase shift $\delta_{300}$ at a frequency of 300 rad/s, which satisfy the following relationship:

$$\tan \delta_{300} \geq 0.45 + 0.164* \tan \delta_{0.05}$$

According to the description and the Examples of EP 1 777 238 this special LDPE can be blended with other polymers, especially with olefin polymers produced by copolymerising ethylene with one or more alpha-olefin copolymers having from 3 to 20 carbon atoms in the presence of a single site catalyst, such as a metallocene catalyst. Preferred are bimodal copolymers of ethylene and at least two alpha-olefin comonomers, like those disclosed in WO 2005/002744. The blends are advantageously used in extrusion coating and have a good processability.
WO 2006/074694 discloses multimodal polymers suitable for extrusion coating, which contain 1 to 50 wt% of a non-thermoplastic filler and show a low water-vapor transmission rate (WVTR).

EP 1674490 A discloses a multimodal polyethylene composition having very low density (VLDPE) which can be produced in the presence of a single site catalyst, such as a metallocene catalyst and are suitable for extrusion coating. It is stated that if desired the VLDPE can be blended with other polymer compositions or additives in a known manner. For blending it with other polymers, especially LDPE is used so that the blend contains from 0 to 50%, preferably from 10 to 40% and in particular 15 to 35% of LDPE, based on the weight of the final blend. Said LDPE preferably having a melt index of at least 3 g/10 min, preferably at least 6.5 g/10 min, particularly in extrusion coating.
The LDPE which can be used is not specified further. According to the examples no LDPE as blend partner was added. The only additive added was the stabilizer Irganox.

Even though the prior art offers already a variety of products useful for extrusion coating having relatively good processability at high line speed and/or one or more other advantageous properties, there is still demand for further improvement of these properties.

Summary of the Invention

The objective of the present invention is therefore to provide a polyethylene composition suitable for extrusion coating, which shows improved processability at high line speed and improved adhesion to special substrates, especially to OPP-films.

Furthermore the compositions according to the invention should show several other advantageous properties, like excellent ESCR, low WVTR and good sealing properties.

It has now surprisingly been found that by combining a blend of a special LDPE, as disclosed in EP 1 777 238, with a bimodal mLLDPE terpolymer, as disclosed in WO 2005/002744, with fillers, polyethylene compositions ideal for extrusion coating may be produced which show all the desired above mentioned properties.

Therefore the object of the invention is solved by an extrusion coating polyethylene compositions A), comprising

    B) a polymer blend comprising

        a) 5 wt% - 60 wt% of a long chain branched, low-density polyethylene, having

        -    a melt index $MFR_2$ of 2.5 to 10.0 g/10 min, according to ISO 1133,
        -    a density of 910 to 935 kg/m$^3$, according to ISO 1183-1987, and
        -    a dynamic viscosity $\eta_{0.05}$ (190°C) at a shear rate of 0.05 rad/s and a dynamic viscosity $\eta_{300}$ rad/s (190°C) which satisfy the following relationship:

$$\eta_{300} \leq 108 \text{ Pa*s} + 0.0253* \eta_{0.05}$$

        and/or
        -    a phase shift $\delta_{0.5}$ (190°C) at a frequency of 0.5 rad/s and a phase shift $\delta_{300}$ (190°C) at a frequency of 300 rad/s, which satisfy the following relationship:

$$\tan \delta_{300} \geq 0.45 + 0.164{*}\tan \delta_{0.05}$$

and

b) 95 wt% - 40 wt% of a bimodal metallocene-based linear low density polyethylene terpolymer having a melt index $MFR_2$ of from 3 to 40 g/10 min, according to ISO 1133, and a density of from 900 to 935 kg/m³, according to ISO 1183-1987, which has been produced by polymerising ethylene and two alpha-olefin comonomers having from 4 to 10 carbon atoms in at least two polymerisation stages in the presence of a metallocene catalyst. and

C) 1wt% - 50wt% based on the total weight of the polymer blend B) of a non-thermoplastic filler.

All datas relating to the rheology of the low density polyethylene a), like dynamic viscosity, complex viscosity, storage modulus, loss modulus, as described below, are determined in the melt-stage at a temperature of 190°C

**Detailed Description of the Invention**

Polymer blend B

The polymer blend B according to the invention comprises a) a special low density polyethylene and b) a bimodal mLLDPE terpolymer.

a) Low density polyethylene

Low density ethylene polymers contain long chain branches and are thus different from linear copolymers of ethylene and alpha-olefin comonomers produced in the presence of a Ziegler or a metallocene catalyst. Especially, the presence of the long chain branches causes clear differences in the rheological behaviour of the polymer.
The low density ethylene polymer (LDPE) used as component a) according to the present invention is described in EP 1 777 238.
This special LDPE has a melt index $MFR_2$ of from 2.5 to 10 g/10 min, especially from 2.5 to 6.5 g/10 min and in particular from 3 to less than 6 g/10 min, a density of from 910 to 935 kg/m³, and $\eta_{0.05}$, the dynamic viscosity at a shear rate of 0.05 rad/s, and $\eta_{300}$, the dynamic viscosity at a shear rate of 300 rad/s, satisfy the following relationship:

$$\eta_{300} \leq 108 + 0.0253 \cdot \eta_{0.05}$$

Preferably, $\eta_{0.05}$ and $\eta_{300}$ satisfy the following relationship:

$$\eta_{300} \leq 102\ Pa{*}s + 0.0253{*}\eta_{0.05}\ .$$

Preferably, tan $\eta_{0.5}$, the value of the tangent of the phase shift at a frequency of 0.5 rad/s, and tan $\delta_{300}$, the value of the tangent of the phase shift at a frequency of 300 rad/s, of the low density polyethylene satisfy the following relationship:

$$\tan \delta_{300} \geq 0.45 + 0.164 \cdot \tan \delta_{0.5}$$

Alternatively the low density ethylene polymer having a melt index $MFR_2$ of from 2.5 to 10 g/10 min, especially from 2.5 to 6.5 g/10 min and in particular from 3 to less than 6 g/10 min, a density of from 910 to 935 kg/m³, can have a tan $\delta_{0.5}$, the value of the tangent of the phase shift at a frequency of 0.5 rad/s, and tan $\delta_{300}$, the value of the tangent of the phase shift at a frequency of 300 rad/s, which satisfy the following relationship:

$$\tan\delta_{300} \geq 0.45 + 0.164 \cdot \tan\delta_{0.5}$$

In a preferred embodiment, $\eta_{0.05}$, the dynamic viscosity at a shear rate of 0.05 rad/s, and $\eta_{300}$, the dynamic viscosity at a shear rate of 300 rad/s, of the low density polyethylene satisfy the following relationship:

$$\eta_{300} \leq 108 + 0.0253 \cdot \eta_{0.05} \ ,$$

even more preferably the following relationship:

$$\eta_{300} \leq 102 \ Pa{*}s + 0.0253{*}\eta_{0.05} \ .$$

The special low density ethylene polymer used as component a) has a higher content of long chain branches per 1000 atoms in the polymer backbone than the traditional low density polyethylenes of the prior art.

Preferably, the low density ethylene polymer has a dynamic viscosity at a shear rate of 0.05 rad/s, $\eta_{0.05}$, of from 1000 to 10000 Pa·s, more preferably from 1500 to 7000 Pa·s and in particular from 2000 to 5000 Pa·s.

Further still, the low density ethylene polymer has a value of tan $\delta_{0.5}$, the value of the tangent of the phase shift at a frequency of 0.5 rad/s of from 1.5 to 3.0, more preferably from 1.9 to 2.8, and a value of tan $\delta_{300}$, the value of the tangent of the phase shift at a frequency of 300 rad/s of from 0.8 to 1.0, more preferably from 0.85 to 0.95.

Preferably still, the low density ethylene component has a shear thinning index $SHI_{1/100}$ of from 20 to 60, more preferably from 30 to 50.

It is also preferred that the low density ethylene polymer has a number average molecular weight, $M_n$, of from 8000 to 30000 g/mol, more preferably from 10000 to 25000. Also, it preferably has a weight average molecular weight, $M_w$, of from 400000 to 600000 g/mol, preferably from 470000 to 540000 g/mol. It is also preferred that it has a z-average molecular weight, $M_z$, of from 2000000 to 4000000 g/mol, more preferably from 2500000 to 3500000 g/mol. It also preferably has a molecular weight distribution, defined as a ratio of the weight average molecular weight to the number average molecular weight, $M_w/M_n$, of from 20 to 50, more preferably from 25 to 40. Preferably, the low-density polyethylene has a storage modulus G'(5 kPa), measured at a loss modulus G" of 5 kPa, within the range of 3000 to 3600 Pa, more preferably 3200 to 3500 Pa.

The low density polyethylene is produced in a high pressure process. In such processes ethylene is polymerised at an elevated temperature of from 150 to 350 °C and at a high pressure of from 1000 to 3000 bar. The polymerisation reaction is initiated by using free radical initiators. Ethylene and at least one initiator are introduced into the reactor at a high temperature and pressure. The polymerisation reaction occurs in solution comprising ethylene in a supercritical state and polyethylene dissolved therein in a short time, typically less than 10 minutes and usually from 30 seconds to 5 minutes. The reaction mixture including the polymer is withdrawn from the reactor, unreacted ethylene is removed from the solution and the polymer melt is extruded, cooled, cut into pellets and recovered. A short description of high pressure processes for ethylene polymerisation is given, among others, in Vieweg, Schley and Schwarz: Kunststoff Handbuch, Band IV, Polyolefine, Carl Hanser Verlag (1969), pages 39 to 51.

Polymerisation process (LDPE)

Preferably the polymerisation process is conducted in an autoclave reactor. The autoclave reactor is a continuously operating stirred tank reactor. In such reactors it is common to have multiple entry points for ethylene and initiator. Usually there is one withdrawal point for the polymer solution, but it is possible to have also multiple product withdrawal points.

Thus, the autoclave reactor can be considered to comprise different zones. A first zone is located in the upstream part of the reactor and the first ethylene and initiator feeds occur in this zone. A second zone is located downstream of the first zone, and ethylene and initiators are also introduced into the second zone. A third zone is located further downstream of the second zone. Into the third zone ethylene is introduced and also minor amounts of initiator may be introduced, even though this is not necessarily done. Downstream of the third zone is a fourth zone, from which the reaction product is withdrawn. Ethylene may be introduced into the fourth zone also. However, initiator is not usually introduced into the fourth zone.

Because the high viscosity of the reaction mixture and low heat transfer area the heat transfer through the autoclave wall is usually insufficient to remove the heat of the reaction. Therefore, the most useful way to control the temperature in the polymerisation reactor is by ethylene and initiator feeds to the different zones. Such methods are known to the person skilled in high pressure ethylene polymerisation technology.

In the preparation of the LDPE polymer used according to the present invention the polymerisation is preferably conducted at a pressure of 1200 to 2000 bar, more preferably from 1350 to 1700 bar. The temperature within the autoclave is preferably from 230 to 300 °C. More preferably, the temperature in the first zone of the reactor is from 230 to 255 °C, and the temperature in the fourth zone of the reactor is from 270 to 300 °C.

A further possibility to produce LDPE polymers used according to the invention is using a tubular reactor instead of the autoclave reactor in the well-known high pressure processes.

Initiators

Radical initiators commonly known in the art may be employed. While the low density ethylene polymer of the invention may be produced with one initiator only, it is preferred to use multiple initiators, which are introduced to different entry points in the reactor. Typically, the initiators are introduced into the first and second zones of the reactor. Especially preferably, a first initiator or a mixture of first initiators is introduced into the first zone and/or the second zone of the reactor and a second initiator or a mixture of second initiators is introduced into the second zone and/or third zone of the reactor. Preferably the first initiator or the first mixture of initiators comprises from 50 to 80 %, more preferably from 60 to 75 % by weight of the total amount of the initiators, and the second initiator or the second mixture of initiators comprises from 20 to 50 %, more preferably from 25 to 40 % by weight of the total amount of the initiators.

Compounds suitable to be used as the first initiator preferably have a half-life of 0.1 hours at a temperature within the range of from 120 to 152 °C, a half life of 1 hour at a temperature within the range of from 100 to 131 °C and a half life of 10 hours at a temperature within the range of from 81 to 111 °C. As the person skilled in the art knows, the half-life of 1 hour at a certain temperature means that at that temperature 50 % of the initial amount of initiator has decomposed after one hour. Examples of compounds suitable to be used as the first initiator are, among others, tert-butyl peroxyacetate (CAS number 107-71-1), tert-butylperoxy-2-ethylhexyl carbonate (34443-12-4), tert-butyl peroxy-benzoate (614-45-9), tert-butylperoxy isopropyl carbonate (2372-21-6), 2,2-di(tert-butylperoxy)butane (2167-23-9) and tert-butylperoxy-3,5,5-trimethylhexaonate (13122-18-4).

Compounds suitable to be used as the second initiator preferably have a half-life of 0.1 hours at a temperature within the range of from 152 to 200 °C, a half life of 1 hour at a temperature within the range of from 131 to 170 °C and a half life of 10 hours at a temperature within the range of from 111 to 141 °C. Examples of such compounds are, among others, di-tert-butylperoxide (110-05-4), 3,6,9-triethyl-3,6,9-trimethyl-1,4,7-triperoxononane (24748-23-0), isopropylcumyl hydroperoxide (26762-93-6) and cumyl hydroperoxide (80-15-9).

b) bimodal mLLDPE terpolymer

As component b) a bimodal mLLDPE terpolymer as described in WO 2005/002744 is used.

The bimodal linear low density polyethylene component has a melt index $MFR_2$ of from 3 to 40 g/10 min, preferably from 5 to 30 g/10 min and more preferably from 10 to 30 g/10 min. Also, the bimodal linear low density polyethylene has a density of from 900 to 935 kg/m$^3$, preferably from 910 to 925 kg/m$^3$ and more preferably from 912 to 922 kg/m$^3$. Preferably, the multimodal linear low density ethylene polymer has been produced by polymerising ethylene and two alpha-olefin comonomers having from 4 to 10 carbon atoms in at least two polymerisation stages in the presence of a metallocene catalyst.

Suitable comonomers are for example but-1-ene, hex-1-ene, 4-methyl-pent-1-ene, hept-1-ene, oct-1-ene and dec-1-ene.

Preferably used comonomers are but-1-ene and hex-1-ene.

The low molecular weight component of the bimodal linear low density polyethylene comprises from 30 to 70 % by weight, preferably 40 to 60 %, of the bimodal linear low density polyethylene component. It has a weight average molecular weight which is lower than that of the bimodal linear low density polyethylene so that the low molecular weight component has a melt index $MFR_2$ which is higher than that of the bimodal linear low density polyethylene. Preferably the weight average molecular weight of the low molecular weight component is such that it corresponds to the melt index $MFR_2$ of 20 to 800 g/10 min, more preferably from 50 to 300 g/min. Further, the low molecular weight component has a lower content of alpha-olefin comonomer(s) than the bimodal linear low density polyethylene and the content of alpha-olefin comonomers is preferably such that it corresponds to the density of from 930 to 950 kg/m$^3$, more preferably from 930 to 940 kg/m$^3$.

The high molecular weight component of the bimodal linear low density polyethylene comprises from 70 to 30 % by weight, preferably from 60 to 40% of the bimodal linear low density polyethylene component. It has a weight average molecular weight which is higher than that of the bimodal linear low density polyethylene so that the high molecular weight component has a melt index $MFR_2$ which is lower than that of the bimodal linear low density polyethylene. Preferably the weight average molecular weight of the high molecular weight component is such that it corresponds to the melt index $MFR_2$ of 0.01 to 5 g/10 min, more preferably from 0.05 to 3 g/min. Further, the high molecular weight component has a higher content of alpha-olefin comonomer(s) than the whole bimodal linear low density polyethylene and the content of alpha-olefin comonomers is preferably such that it corresponds to the density of from 880 to 915 $kg/m^3$, more preferably from 890 to 910 $kg/m^3$. Especially the high molecular weight component should have such weight average molecular weight and comonomer content that the bimodal linear low density polyethylene has the desired melt index and density.

Especially preferably, the bimodal linear low density polyethylene has been produced by polymerising ethylene and two alpha-olefin comonomers having from 4 to 10 carbon atoms in at least two polymerisation stages in the presence of a metallocene catalyst. Then it is possible either to feed a different alpha-olefin comonomer to each polymerisation stage or to feed at two different alpha-olefin comonomers into one polymerisation stage, which preferably is the stage where the high molecular weight component is produced.

It is preferred that the polymer be prepared in a two or more stage polymerization in which in an earlier stage the lower alpha-olefin comonomer (e.g. but-1-ene) is incorporated and in which in a later stage the higher alpha-olefine comonomer (hex-1-ene) is incorporated. Nonetheless, it is within the scope of the invention to produce the polymer in a two stage polymerization reaction in which an ethylene homopolymer is produced in the first stage and an ethylene terpolymer is produced in the second stage or vice versa or in which an ethylene copolymer with the higher alpha-olefine comonomer is produced in the first stage and an ethylene copolymer with the lower alpha-olefine comonomer is produced in the second stage. Likewise, an ethylene copolymer may be produced in the first stage and an ethylene terpolymer in the second stage and vice versa. It is also possible to employ a prepolymerisation stage as is well known in the art.

In a more preferred embodiment the polyethylene is formed from a mixture of an ethylene/but-1-ene copolymer (lower molecular weight component) preferably made in the slurry phase and an ethylene/hex-1-ene copolymer (higher molecular weight component) preferably made in the gas phase.

The expression "homopolymer" of ethylene used herein refers to a polyethylene that consists substantially, i.e. at least 98wt%, preferably at least 99wt%, more preferably at least 99,5wt% and most preferably at least 99,8wt% of ethylene units.

The ethylene terpolymers used as component b) for the polymer blend B are produced using a metallocene catalyst, e.g. a catalyst comprising a metal coordinated by one or more η-bonding ligands. The metals are typically Zr, Hf or Ti, especially Zr or Hf. The η-bonding ligand is typically an $η^5$-cyclic ligand, i.e. a homo or heterocyclic cyclopentadienyl group optionally with fused or pendant substituent. Such metallocene catalysts have been widely described in the scientific and patent literature for about twenty years. Such metallocene catalysts are frequently used with catalyst activators or cocatalysts, e.g. alumoxanes such as methylaluminoxane, again as widely described in the literature.

The mLLDPE terpolymer used for the blend B is bimodal, i.e. its molecular weight profile does not comprise a single peak but instead comprises the combination of two peaks (which may or may not be distinguishable) centred about different average molecular weights as a result of the fact that the polymer comprises two separately produced components. In this embodiment, a higher molecular weight component preferably corresponds to a copolymer of the higher alpha-olefin comonomer and a lower molecular weight component preferably corresponds to a copolymer of the lower alpha-olefin comonomer.

Such bimodal ethylene polymers may be prepared for example by two or more stage polymerization or by the use of two or ore different polymerization catalysts in a one stage polymerization.

Preferably however they are produced in a two-stage polymerization using the same metallocene catalysts, in particular a slurry polymerization in a loop reactor followed by a gas phase polymerization in a gas phase reactor. A loop reactor - gas phase reactor system has been developed by Borealis and is known as BORSTAR® technology. In this respect, reference is made to EP 0 887 379 A1, WO 2004/000899, WO 2004/111095, WO 99/24478, WO 99/24479 and WO 00/68315.

Preferably the lower molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably i-butane or propane. A $C_4$-$C_{10}$ alpha-olefine comonomer is added to control the density of the lower molecular weight copolymer fraction. Preferably the hydrogen concentration is selected so that the lower molecular weight copolymer fraction has the desired melt flow rate.

The slurry is intermittently or continuously removed from the loop and transferred to a separation unit where at least the chain transfer agents (e.g. hydrogen) are separated from the polymer. The polymer containing the active catalyst is then introduced into a gas phase reactor where the polymerization proceeds in the presence of additional ethylene, comonomer and optionally chain transfer agent to produce the higher molecular weight copolymer fraction. The polymer is intermittently or continuously withdrawn from the gas phase reactor and the remaining hydrocarbons are separated from the polymer. The polymer collected from the gas phase reactor is the mLLDPE terpolymer used as component b) for blend B.

The conditions in the gas phase reactor are selected so that the mLLDPE terpolymer has the desired properties.

Polymer blend B

The polymer blend B includes the low density ethylene polymer a) in an amount of from 5 to 60 % by weight, based on the total weight of the blend. Preferably, it comprises from 5 to 40 % by weight of the low density ethylene polymer a), more preferably from 10 to 35 % and in particular from 20 to 35 % by weight of the special LDPE. In addition to the low density ethylene polymer component, the polymer blend B comprises of from 95 to 40 % by weight, %, preferably from 95 to 60 %, more preferably from 90 to 65 % and in particular from 80 to 65 % of the bimodal mLLDPE terpolymer b).

Especially preferably the polymer blend B has a high viscosity at low shear rates, because then the polymer has sufficient melt strength to avoid the melt from breaking during the extrusion process. Also, the polymer is not likely to undergo draw resonance which makes it readily processable and will show a reduced neck-in in the extrusion coating process. On the other hand, the blends have a relatively low viscosity at high shear rates, meaning that they can be processed with a high line speed exceeding 500 m/min. Thus, the blends B according to the invention preferably have a value of the dynamic viscosity $\eta_{0.5}$ of more than 400 Pas. Further, the blends have a value of the dynamic viscosities $\eta_{300}$ and $\eta_{0.5}$ meeting the following condition:

$$\eta_{300} \leq 0.233 \cdot \eta_{0.5} + 50$$

In addition the blends preferably have a value of tan $\delta_{0.5}$, the value of the tangent of the phase shift at a frequency of 0.5 rad/s of about 10 or less, or a value of tan $\delta_{300}$, the value of the tangent of the phase shift at a frequency of 300 rad/s of about 2.0 or less, more preferably from 1.0 to 2.0.

Preferably still, the blends have a density within the range of from 900 kg/m$^3$ to 965 kg/m$^3$. Where good sealing properties are desired it is preferable that the density is from 900 to 935 kg/m$^3$, more preferably from 910 to 925 kg/m$^3$ and especially preferably 915 to 922 kg/m$^3$. It is also preferred that the density $\rho$ and the melting temperature, Tm, of the blend satisfy the following relationship:

$$T_m \geq 1.6 \cdot \rho - 1360$$

where $\rho$ is given in kg/m$^3$ and $T_m$ in °C.

In addition it is preferred that the blends B have a melt index MFR$_2$ of from 2 to 50 g/10 min, more preferably from 3 to 30 g/10 min and especially from 5 to 25 g/10 min.

In addition the polymer blend B may contain minor amounts of other polymers, provided that the end properties of the blend B are not negatively affected. Further, the blend may contain antioxidants, stabilizers and other additives known in the art, depending on the desired properties of the final composition, up to a total content of $\leq$ 1 wt%.

Final extrusion coating polyethylene composition A

The final extrusion coating polyethylene compositions comprise polymer blend B and a non-thermoplastic filler C. Any non-thermoplastic filler having a positive influence on the desired properties can be used.

Non-thermoplastic fillers, which can be used according to the invention, may be selected from the group consisting of talc, mica, montmorillonite, wollastonite, bentonite, silica, halloysite, kaolinite and other phyllosilicates; carbonates, sulphates.

Preferably anisotropic minerals of platy character are used.

Preferably, the filler shall be lamellar, such as clay, mica or talc. More preferably, the filler shall be finely divided. The finely divided filler consists of about 95 wt% of particles having particle sizes of less than 20 $\mu$m, preferably less than 10 $\mu$m and 20-30 wt% of particles having a particle size of less than 1 $\mu$m. In the present invention all layer materials may be used as long as they have the ability to disperse in the polymer composition. The filler may preferably be either a clay-based compound or a submicron filler such as talc, calcium carbonate or mica, which usually have been treated, for instance by grinding, to obtain particles of small, i.e. submicron, dimensions, in situ as stated above.

Of course the filler C may also contain components comprising a mixture of different fillers, such as mixtures of clay-based filler and talc.

Preferably talc, more preferably finely powdered talc is used as filler C. Most preferably talc is used as the sole filler. Still more preferably the talc used has a top-cut particle size of 20 $\mu$m (95% of particles below that size, according to ISO 787-7) even more preferred of 10 $\mu$m (95%<).

Suitable commercial available finely powdered talcs are for example Finntalc MO5 Lohjatalc PV05 or Mytalc 5 SL.

The amount of filler used is from 1 to 50 wt% based on the total weight of the polymer blend B, more preferably 5 to 40 wt% and most preferably 10 to 35 wt%.

Extrusion coating polyethylene composition D

In a further embodiment of the present invention the final extrusion coating polyethylene composition A, comprising polymer blend B and a filler C, is blended with polymer blend B, yielding an extrusion coating composition D Preferably such a composition D comprises 40 - 60 wt% of the polyethylene composition A and 60 - 40 wt% of polymer blend B, most preferably 50 wt% of the polyethylene composition A and 50 wt% of polymer blend B.

Use of the composition A and D

The compositions A and D are advantageously used in extrusion coating, where they exhibit a number of advantageous features. First, the compositions have a good processability and they can be used in coating lines having a line speed of at least 200 m/min, preferably at least 400 m/min and in particular at least 500 m/min, and with low coating weights.

Further they show a low neck-in and high draw down.

When used in the coating process they exhibit a reduced risk of draw resonance and an even distribution of the coating is obtained. These two features allow a high throughput in the coating line with a good product quality.

The substrate to be coated can be any substrate known in the art, such as paper, paperboard, Kraft paper, metal foil, plastic films, such as BOPP (biaxially-oriented polypropylene) film, and cellophane film. To improve the adhesion between the substrate and the plastic layer the methods commonly known in the art may be used, such as ozone treatment of the molten polymer film, flame treatment and corona treatment of the substrate, an adhesive layer may be used, and an adhesion promoter may be used.

It has been found that the polymer compositions as described above have a very good adhesion to the substrates, in particular to aluminium and BOPP, without any need to have an adhesion layer between the substrate and the coating. Additionally, layers produced from the compositions according to the invention have a low water-vapour transmission rate (WVTR).

Thus a further embodiment of the present invention is the use of the polymer compositions for extrusion coating of substrates selected from Aluminium foil, OPP-film, UG Kraft paper and pigmented coated board.

Furthermore the polymer compositions according to the invention lead to extruded coating structures, which exhibit excellent resistance to environmental stress cracking.

Extrusion coating process

The extrusion coating process may be carried out using conventional extrusion coating techniques. Hence, the polymer compositions A or D are fed, optionally together with additives, to an extruding device. From the extruder the polymer melt is passed through a flat die to the substrate to be coated. Due to the distance between the die lip and the nip, the molten plastic is oxidised in the air for a short period, usually leading to an improved adhesion between the coating and the substrate. The coated substrate is cooled on a chill roll, after which it is passed to edge trimmers and wound up. The width of the line may vary between, for example 500 to 1500 mm, e.g. 800 to 1100 mm, with a line speed of up to 5000 m/min, preferably up to 1500 m/min and more preferably up to 1000 m/min, for instance 500 to 800 m/min. The temperature of the polymer melt is typically between 270 and 300°C.

It is also possible to employ a coating line with at least two extruders to make it possible to produce multilayered coatings with different polymers. It is also possible to have arrangements to treat the polymer melt exiting the die to improve adhesion, e.g. by ozone treatment, corona treatment or flame treatment.

The coating will typically be 10 to 1000 $\mu$m in thickness, especially 20 to 100 $\mu$m. The specific thickness will be selected according to the nature of the substrate and its expected subsequent handling conditions. The substrate may be as thick as 10 to 1000 $\mu$m, e.g. 6 to 300 $\mu$m.

Methods:

**Molecular weights, molecular weight distribution ( Mn, Mw, MWD) - GPC**

The weight average molecular weight Mw and the molecular weight distribution (MWD = Mw/Mn wherein Mn is the number average molecular weight and Mw is the weight average molecular weight) was measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

The **melt flow rates** were measured with a load of 2.16 kg and at 190°C. The melt flow rate ($MFR_2$) is that quantity of polymer in grams which the test apparatus standardized to ISO 1133 extrudes within 10 minutes at a temperature of 190°C under a weight of 2.16 kg.

**Density** was determined according to ISO 1183-1987 on compression-moulded specimens

**Comonomer contents** (hexene and butene) were measured with Fourier transform infrared spectroscopy (FTIR) calibrated with $^{13}$C-NMR

**Dynamic viscosity and Shear thinning index**

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G*) and complex viscosity ($\eta$*) were obtained as a function of frequency ($\omega$). $\eta_{100}$ is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities $\eta$*(1 kPa) and $\eta$*(100 kPa) at a constant value of complex modulus of 1 kPa and 100 kPa, respectively. The shear thinning index SHI1/100 is defined as the ratio of the two viscosities $\eta$*(1 kPa) and $\eta$*(100 kPa), i.e. $\eta$(1)/ $\eta$(100).

The definitions and measurement conditions are also described in detail on page 8, line 29 to page 11, line 25 of WO 00/22040.

It is usually not practical to measure the complex viscosity at the value of frequency of 0.05 rad/s directly. The value can be extrapolated by conducting the measurements down to the frequency of 0.126 rad/s, drawing the plot of complex viscosity vs. frequency, drawing a best-fitting line through the five points corresponding to the lowest values of frequency and reading the viscosity value from this line.

The phase shift $\delta$ indicates how much the dynamic response measured from the polymer is shifted with respect to the input signal. The phase shift is given in radians. The frequency which was used in the measurement is indicated as a subscript. Thus, $\delta_{0.5}$ indicates the phase shift measured at 0.5 rad/s frequency. Often the value of tan$\delta$, i.e. the tangent of the phase shift, is used instead of $\delta$.

**Draw down** DD ($10g/m^2$) was determined by keeping the coating weight constant (10 $g/m^2$) during the testing period. The starting line speed was 100 m/min and it was increased with the acceleration of 100 m/min at 25 seconds up to 500 m/min with 10 $g/m^2$, then the thickness was reduced until the web broke.

**WVTR:** The water vapour transmission rate was measured at 90 % relative humidity and 37.8°C temperature according to ASTM F 1249.

The measurement is performed in a diffusion cell where a stream of dry air flows above the sample. Below the sample is an atmosphere with constant humidity at a constant temperature as indicated above. When the sample has reached an equilibrium, the air stream is directed to an IR detector determining the water content of the air stream. In this way the WVTR can be measured. This method gives approximately five times higher WVTR values than the method according to ASTM E96.

Examples:

**Example 1**

A polymerisation reactor of autoclave type was used. Ethylene was introduced into the reactor to the different levels so that the temperatures at each level were as indicated in Table 1. Two initiators were used so that initiator 1 was introduced to levels 9 and 7 and initiator 2 into level 5. Initiator 1 was a peroxide having a half-life of 0.1 hours at a temperature of 142 °C, a half-life of 1 hour at a temperature of 122 °C and a half-life of 10 hours at a temperature of 103 °C. Initiator 2 had a half-life of 0.1 hours at a temperature of 164 °C, a half-life of 1 hour at a temperature of 141 °C and a half-life of 10 hours at a temperature of 121 °C. The pressure within the reactor was 1500 bar and the temperature at the different levels was from 242 to 248 °C. The conditions can be seen in Table 1.

The polymer collected from the reactor was extruded into pellets. It had $MFR_2$ of 4.5 g/10 min and a density of 917 kg/m$^3$. It had further $\eta_{0.05}$ of 3690 Pa·s and $\eta_{300}$ of 180 Pa·s. The value of tan$\delta$ at frequencies of 0.5 and 300 rad/s was 2.3 and 0.88, respectively. G' (5kPa) was 3433 Pa. It further had $M_n$ of 17500 g/mol, $M_w$ of 629000 g/mol and Mz of 3520000 g/mol. The polydispersity index, $M_w/M_n$ was thus 36.

Table 1: reactor conditions

| Reactor condition | Unit | Value |
|---|---|---|
| Temperature, level 9 | °C | 242 |
| Temperature, level 8 | °C | 242 |
| Temperature, level 7 | °C | 242 |
| Temperature, level 6 | °C | 252 |
| Temperature, level 5 | °C | 259 |
| Temperature, level 4 | °C | 275 |
| Temperature, level 3 | °C | 280 |
| Temperature, level 2 | °C | 281 |
| Temperature, level 1 | °C | 284 |
| Pressure | bar | 1516 |
| Initiator feed, level 9 | kg/h | 25 |
| Initiator feed, level 7 | kg/h | 17.5 |
| Initiator feed, level 5 | kg/h | 17.5 |
| Initiator feed, level 3 | Kg/h | 3 |
| Production rate | t/h | 8.5 |

**Example 2**

The procedure of Example 1 was repeated except that the conditions were slightly varied to produce a polymer having an $MFR_2$ of 6.5 g/10 min and density of 917 kg/m$^3$. The resulting LDPE polymer had further $\eta_{0.05}$ of 2369 Pa·s and $\eta_{300}$ of 161 Pa·s. The value of tan$\delta$ at frequencies of 0.5 and 300 rad/s was 2.6 and 0.93, respectively. G' (5kPa) was 3307 Pa.

**Example 3**

The catalyst was prepared according to the instructions of Catalyst Preparation Example 2 of WO 2005/002744.
A continuously operating loop reactor having a volume of 500 dm$^3$ was operated at 85 °C temperature and 60 bar pressure. Into the reactor were introduced propane diluent, ethylene, 1-butene comonomer, hydrogen and the polymerisation catalyst prepared according to Catalyst Preparation Example 2 referred to above in such amounts that the ethylene concentration in the liquid phase of the loop reactor was 7 % by mole, the ratio of hydrogen to ethylene was 0.65 mol/kmol, the ratio of 1-butene to ethylene was 155 mol/kmol and the polymer production rate in the reactor was 25 kg/h. The thus formed polymer had a melt index $MFR_2$ of 140 g/10 min and a density of 935 kg/m$^3$.

The slurry was intermittently withdrawn from the reactor by using a settling leg and directed to a flash tank operated at a temperature of about 50 °C and a pressure of about 3 bar.

From the flash tank the powder, containing a small amount of residual hydrocarbons, was transferred into a gas phase reactor operated at 75 °C temperature and 20 bar pressure. Into the gas phase reactor were also introduced additional ethylene, 1-hexene comonomer and nitrogen as inert gas in such amounts that the ethylene concentration in the circulating gas was 22 % by mole, the ratio of hydrogen to ethylene was about 0.7 mol/kmol, the ratio of 1-hexene to ethylene was 18 mol/kmol and the polymer production rate was 25 kg/h.

The production split between the loop and gas phase reactors was thus 50/50.

The resulting terpolymer had a melt index $MFR_2$ of 17 g/10 min and a density of 917 kg/m$^3$.

## Example 4

The polymer of Example 3 was stabilised by adding to the powder 400 ppm Irganox B561. The stabilised polymer was then mixed with polymer pellets obtained from Example 2 so that the content of LDPE from Example 2 was 30 % by weight of the total polymer blend B.

The polymer pellets had a melt index $MFR_2$ of 15 g/10 min, a density of 920 kg/m$^3$, a 1-butene content of 2.1 wt% and a 1-hexene content of 6.3 wt%.

The mixture was then extruded and pelletised under nitrogen atmosphere with a CIM90P extruder, manufactured by Japan Steel Works. The melt temperature was about 200 °C, throughput 280 kg/h and the specific energy input (SEI) was 200 kWh/t.

This blend B was further mixed with talc (Finntalc MO5 SL, manufactured and sold by Mondo Minerals, top cut $d_{96}$ [$\mu$m] = 8) as filler C, so that the content of talc was 30 % by weight of the final extrusion coating polyethylene compositions A.

## Example 5

The final extrusion coating polyethylene compositions A according to Example 4 (containing polymer blend B and filler C) was blended with polymer blend B according to Example 4 so that the final extrusion coating polyethylene compositions D contained 50 % by weight of extrusion coating polyethylene compositions A and 50 % by weight of polymer blend B.

## Comparative Example X

As a comparative Example X an extrusion coating polyethylene compositions CC7209, a filled LDPE containing 30 % by weight of inorganic filler, manufactured and sold by Borealis, was used.

## Comparative Example Y

As a comparative Example Y a blend of 50 % by weight of CC7209 and 50 % by weight of CA7230, a low density polyethylene manufactured and sold by Borealis, was used.

## Example 6

Extrusion coating runs were made on Beloit coextrusion coating line. It had a Peter Cloeren's die and a five layer feed block. The width of the line was 850 - 1000 mm and the maximum line speed was 1000 m/min (design value).

In the coating line above a UG kraft paper having a basis weight of 70 g/m$^2$ was coated with a layer of the polymer compositions prepared according to the Examples 4 and 5 and Comparative Examples X and Y above, having a basis weight of 10 g/m$^2$. The temperature of the polymer melt was set to 300 °C. The line speed was gradually increased and then the thickness was reduced until the web broke to evaluate the processability. It was found out that both compositions A and D could be processed at a line speed of more than 500 m/min.

Table 2:

| Material | Draw down (DD) | DD thickness |
|---|---|---|
| Composition A | > 500 m/min | 8,4 g/m$^2$ |
| Composition D | > 500 m/min | 3,3 g/m$^2$ |
| Comparative Example X | 380 m/min | 10 g/m$^2$ |

(continued)

| Material | Draw down (DD) | DD thickness |
|---|---|---|
| Comparative Example Y | 480 m/min | 10 g/m$^2$ |

**Example 7:**

For testing the adhesion of the polymer compositions of the invention (compositions A and D) in comparison to the comparative composition Y adhesion samples were prepared according to Example 6, but at a constant line speed of 100 m/min. A corona pre-treatment has been done for all samples, but no other adhesion improvers, primers or the like have been used.

As substrate the following materials have been used:

a) Al-foil
b) Biaxially oriented polypropylene film
c) Pigmented coated board

The substrates were attached to UG-kraft paper, which was used as supporting web. The coating weight was 30 g/m$^2$

The adhesion to the substrate has been evaluated visual on a scale 1...5; where 31/2 is approved

Table 3:

| Material | a | b | c |
|---|---|---|---|
| Composition A | 4 | 4 | 4+ |
| Composition D | 4 | 4 | 3,5 |
| Comparative Example Y | 4,5 | 2,5 | 4 |

**Claims**

1. Extrusion coating polyethylene compositions A), comprising

B) a polymer blend comprising

a) 5 wt% - 60 wt% of a long chain branched, low-density polyethylene, having

- a melt index MFR$_2$ of 2.5 to 10.0 g/10 min, according to ISO 1133,
- a density of 910 to 935 kg/m$^3$, according to ISO 1183-1987 and
- a dynamic viscosity $\eta_{0.05}$ (190°C) at a shear rate of 0.05 rad/s and a dynamic viscosity $\eta_{300}$ rad/s (190°C) which satisfy the following relationship:

$$\eta_{300} \leq 108 \text{ Pa*s} + 0.0253* \eta_{0.05}$$

and/or
- a phase shift $\delta_{0.5}$ (190°C) at a frequency of 0.5 rad/s and a phase shift $\delta_{300}$ at a frequency of 300 rad/s (190°C), which satisfy the following relationship:

$$\tan \delta_{300} \geq 0.45 + 0.164* \tan \delta_{0.05}$$

and
b) 95 wt% - 40 wt% of a bimodal metallocene-based linear low density polyethylene terpolymer having a

melt index MFR$_2$ of from 3 to 40 g/10 min, according to ISO 1133, and a density of from 900 to 935 kg/m$^3$, according to ISO 1183-1987, which has been produced by polymerising ethylene and two alpha-olefin comonomers having from 4 to 10 carbon atoms in at least two polymerisation stages in the presence of a metallocene catalyst.

and

C) 1wt% - 50wt% based on the total weight of the polymer blend B) of a non-thermoplastic filler selected from the group consisting of talc, mica, montmorillonite, wollastonite, bentonite, silica, halloysite, kaolinite, carbonates and sulphates.

2. Extrusion coating polyethylene compositions A) according to claim 1, wherein said long chain branched, low-density polyethylene has a melt index MFR$_2$ of from 2,5 - 6,5 g/10min.

3. Extrusion coating polyethylene compositions A) according to claim 1, wherein said bimodal metallocene-based linear low density polyethylene terpolymer has been produced by polymerising ethylene and two alpha-olefin comonomers selected from but-1-ene, hex-1-ene, 4-methyl-pent-1-ene, hept-1-ene, oct-1-ene and dec-1-ene.

4. Extrusion coating polyethylene compositions A) according to claim 3, wherein said comonomers are but-1-ene and hex-1-ene.

5. Extrusion coating polyethylene compositions A) according to claim 1, wherein said bimodal metallocene-based linear low density polyethylene terpolymer comprises

a) 30 to 70 wt%, based on the total bimodal linear low density ethylene polymer, of a low molecular component having a density of from 930 to 950 kg/m$^3$, and
b) 70 to 30 wt%, bimodal linear low density ethylene polymer, of a high molecular weight component having a density of from 880 to 915 kg/m$^3$.

6. The extrusion coating polyethylene compositions A) according to one of the claims 1 to 5, wherein the composition A) has a value of the dynamic viscosities $\eta_{300}$ and $\eta_{0.5}$ meeting the following condition: $\eta_{300} \leq 0.233 \cdot \eta_{0.5} + 50$

7. The extrusion coating polyethylene compositions A) according to any one of the claims 1 to 6, wherein the extrusion coating polyethylene compositions A) has a density within the range from 900 kg/m$^3$ to 965 kg/m$^3$.

8. Extrusion coating polyethylene compositions A) according to any one of the claims 1 to 7, wherein 95 wt% of the non-thermoplastic filler C) has a particle size of less than 10 $\mu$m.

9. Extrusion coating polyethylene compositions A) according to any one of the claims 1 to 8, wherein said filler is talc.

10. Extrusion coating polyethylene compositions D, comprising 40 - 60 wt% of the polyethylene composition A), according to one of the claims 1 to 9, and 60 - 40 wt% of polymer blend B according to claim 1 or 2.

11. Use of Extrusion coating polyethylene compositions A according to any one of claims 1 to 9 for extrusion coating.

12. Use of Extrusion coating polyethylene compositions D according to claim 10 for extrusion coating.

13. Use according to claim 11 or 12 for extrusion coating of substrates selected from Aluminium foil, OPP-film, UG Kraft paper and pigmented coated board.

14. Use according to any of claims 11 to 13, **characterized in that** line speeds of 500 to 800 m/min are used.

**Patentansprüche**

1. Extrusionsbeschichtete Polyethylenzusammensetzung A), umfassend B) eine Polymermischung umfassend

a) 5 Gew.% bis 60 Gew.-% eines langeketten verzweigten Polyethylens geringer Dichte, besagtes Polyethylen hat

- ein nach ISO 1133 gemessenen Schmelzindex $MFR_2$ von 2.5 bis 10.0 g/10 min,
- eine nach ISO 1183-1987 gemessene Dichte von 910 bis 935 kg/m$^3$ und
- eine dynamische Viskosität $\eta_{0,05}$ (190°C) bei einer Scherrate von 0.05 rad/s und eine dynamische Viskosität $\eta_{300}$ rad/s (190°C) welche die folgende Beziehung erfüllen:

$$\eta_{300} \leq 108 \text{ Pa*s} + 0.0253* \eta_{0.05}$$

und/oder
- einen Phasenshift $\delta_{0.5}$ (190°C) bei einer Frequenz von 0.5 rad/s und einen Phasenshift $\delta_{300}$ bei einer Frequenz von 300 rad/s (190°C) welche die folgende Beziehung erfüllen:

$$\tan \delta_{300} \geq 0.45 + 0.164* \tan \delta_{0.05}$$

und
b) 95 Gew.-% bis 40 Gew.-% eines bimodalen Metallocen-basierenden linearen Polyethylen-Terpolymers geringer Dichte, besagtes Terpolymer hat einen nach ISO 1133 gemessenen Schmelzindex $MFR_2$ von 3 bis 40 g/10 min und eine nach ISO 1183-1987 gemessene Dichte von 900 bis 935 kg/m$^3$, wobei das Terpolymer hergestellt worden ist durch Polymerisierung von Ethylen und zwei alpha-Olefin-Comonomeren mit 4 bis 10 Kohlenstoffatomen in mindestens zwei Polymerisationsschritten in Gegenwart eines Metallocen-Katalysators und

c) 1 Gew.-% bis 50 Gew.-% basierend auf dem Gesamtgewicht der Polymermischung B) eines nicht-thermoplastischen Füllers ausgewählt aus der Gruppe bestehend aus Talk, Glimmer, Montmorillonit, Wallastonit, Bentonit, Kieselerde, Halloysit, Kaolinit, Carbonaten und Sulfaten.

2.  Extrusionsbeschichtete Polyethylenzusammensetzung A) nach Anspruch 1, worin besagtes langketten verzweigtes Polyethylen geringer Dichte einen Schmelzindex $MFR_2$ von 2,5 - 6,5 g/10 min hat.

3.  Extrusionsbeschichtete Polyethylenzusammensetzungen A) nach Anspruch 1, worin besagtes bimodal Metallocen-basierendes lineares Polyethylen-Terpolymer geringer Dichte durch Polymerisierung von Ethylen und zwei alpha-Olefin Comonomeren ausgewählt aus der Gruppe bestehend aus But-1-en, Hex-1-en, 4-Methyl-pent-1-en, Hept-1-en, Oct-1-en und Dec-1-en hergestellt worden ist.

4.  Extrusionsbeschichtete Polyethylenzusammensetzungen A) nach Anspruch 3, worin die Comonomere But-1-en und Hex-1-en sind.

5.  Extrusionsbeschichtete Polyethylenzusammensetzungen A) nach Anspruch 1, worin besagtes bimodal Metallocen-basierendes lineares Polyethylen-Terpolymer geringer Dichte,

a) 30 bis 70 Gew.-% basierend auf dem gesamten bimodalen, linearen Ethylenpolymer geringer Dichte eine niedrigmolekulare Komponente mit einer Dichte von 930 - 950 kg/m$^3$ und
b) 70 bis 30 Gew.-% basierend auf dem gesamten bimodalen, linearen Ethylenpolymer geringer Dichte eine hochmolekulare Komponente mit einer Dichte von 880 - 915 kg/m$^3$,

umfasst.

6.  Extrusionsbeschichtete Polyethylenzusammensetzungen A) nach irgendeinem der vorhergehenden Ansprüche 1 bis 5, worin die Zusammensetzung A) einen Wert an dynamischen Viskositäten $\eta_{300}$ und $\eta_{0.5}$ hat, so dass die folgende Bedingung:

$$\eta_{300} \leq 0.233 \cdot \eta_{0.5} + 50$$

erfüllt ist.

**7.** Extrusionsbeschichtete Polyethylenzusammensetzungen A) nach irgendeinem der Ansprüche 1 bis 6, worin die extrusionsbeschichtete Polyethylenzusammensetzung A) eine Dichte im Bereich von 900 kg/m$^3$ bis 965 kg/m$^3$ hat.

**8.** Extrusionsbeschichtete Polyethylenzusammensetzungen A) nach irgendeinem der vorhergehenden Ansprüche 1 bis 7, worin 95 Gew.-% des nicht-thermischen Füllers C) eine Partikelgröße von weniger als 10 $\mu$m hat.

**9.** Extrusionsbeschichtete Polyethylenzusammensetzungen A) nach irgendeinem der Ansprüche 1 bis 8, worin besagter Füller Talk ist.

**10.** Extrusionsbeschichtete Polyethylenzusammensetzungen D), umfassend 40 bis 60 Gew.-% einer Polyethylenzusammensetzung A) nach irgendeinem der Ansprüche 1 bis 9 und 60 bis 40 Gew.-% einer Polymermischung B) nach irgendeinem der Ansprüche 1 oder 2.

**11.** Verwendung von extrusionsbeschichteten Polyethylenzusammensetzungen A), nach irgendeinem der Ansprüche 1 bis 9 für Extrusionsbeschichtung.

**12.** Verwendung von extrusionsbeschichtender Polyethylenzusammensetzungen D) nach Anspruch 10 für Extrusionsbeschichtung.

**13.** Verwendung nach Anspruch 11 oder 12 für Extrusionsbeschichtung von Substraten ausgewählt aus der Gruppe bestehend aus Aluminiumfolie, OPP-Film, UG-Kraftpapier und pigmentbeschichtetes Brett.

**14.** Verwendung nach irgendeinem der Ansprüche 11 bis 13, **dadurch gekennzeichnet das** Bandgeschwindigkeiten von 500 bis 800 m/min verwendet werden.

## Revendications

**1.** Compositions de polyéthylène de revêtement par extrusion A), comprenant B) un mélange de polymères comprenant

a) 5 à 60 % en poids d'un polyéthylène basse densité ramifié à longue chaîne, ayant

- un indice de fluidité MFR$_2$ de 2,5 à 10,0 g/10 min, selon ISO 1133,
- une densité de 910 à 935 kg/m$^3$, selon ISO 1183-1987 et
- une viscosité dynamique $\eta_{0,05}$ (190 °C) à un taux de cisaillement de 0,05 rad/s et une viscosité dynamique $\eta_{300}$ rad/s (190 °C) qui satisfont la relation suivante :

$$\eta_{300} \leq 108 \text{ Pa*s} + 0,0253* \ \eta_{0,05}$$

et/ou
- un décalage de phase $\delta_{0,05}$ (190 °C) à une fréquence de 0,5 rad/s et un décalage de phase $\delta_{300}$ à une fréquence de 300 rad/s (190 °C) qui satisfont la relation suivante :

$$\tan \delta_{300} \geq 0,45 + 0,164* \tan \delta_{0,05}$$

et
b) 95 à 40 % en poids d'un terpolymère de polyéthylène basse densité linéaire à base de métallocène bimodal ayant un indice de fluidité MFR$_2$ de 3 à 40 g/10 min, selon ISO 1133, et une densité de 900 à 935 kg/m$^3$, selon ISO 1183-1987, lequel a été produit en polymérisant de l'éthylène et deux comonomères d'alpha-oléfine ayant 4 à 10 atomes de carbone dans au moins deux étapes de polymérisation en présence d'un catalyseur métallocène,
et

C) 1 à 50 % en poids, sur la base du poids total du mélange de polymères B) d'une charge non thermoplastique choisie dans le groupe constitué par le talc, le mica, la montmorillonite, la wollastonite, la bentonite, la silice, la halloysite, la kaolinite, les carbonates et les sulfates.

2. Compositions de polyéthylène de revêtement par extrusion A) selon la revendication 1, dans lesquelles ledit polyéthylène basse densité ramifié à longue chaîne a un indice de fluidité $MFR_2$ de 2,5 à 6,5 g/10 min.

3. Compositions de polyéthylène de revêtement par extrusion A) selon la revendication 1, dans lesquelles ledit terpolymère de polyéthylène basse densité linéaire à base de métallocène bimodal a été produit en polymérisant de l'éthylène et deux comonomères d'alpha-oléfine choisis parmi le but-1-ène, l'hex-1-ène, le 4-méthyl-pent-1-ène, l'hept-1-ène, l'oct-1-ène et le déc-1-ène.

4. Compositions de polyéthylène de revêtement par extrusion A) selon la revendication 3, dans lesquelles lesdits comonomères sont le but-1-ène et l'hex-1-ène.

5. Compositions de polyéthylène de revêtement par extrusion A) selon la revendication 1, dans lesquelles ledit terpolymère de polyéthylène basse densité linéaire à base de métallocène bimodal comprend

   a) 30 à 70 % en poids, sur la base du polymère d'éthylène basse densité linéaire bimodal total, d'un composant de faible masse moléculaire ayant une densité de 930 à 950 kg/m$^3$, et
   b) 70 à 30 % en poids, sur la base du polymère d'éthylène basse densité linéaire bimodal, d'un composant de masse moléculaire élevée ayant une densité de 880 à 915 kg/m$^3$.

6. Compositions de polyéthylène de revêtement par extrusion A) selon l'une des revendications 1 à 5, dans lesquelles la composition A) a une valeur des viscosités dynamiques $\eta_{300}$ et $\eta_{0,5}$ satisfaisant la condition suivante : $\eta_{300} \leq 0{,}233 \cdot \eta_{0,05} + 50$

7. Compositions de polyéthylène de revêtement par extrusion A) selon l'une quelconque des revendications 1 à 6, dans lesquelles les compositions de polyéthylène de revêtement par extrusion A) ont une densité dans la plage de 900 kg/m$^3$ à 965 kg/m$^3$.

8. Compositions de polyéthylène de revêtement par extrusion A) selon l'une quelconque des revendications 1 à 7, dans lesquelles 95 % en poids de la charge non thermoplastique C) a une taille de particule inférieure à 10 $\mu$m.

9. Compositions de polyéthylène de revêtement par extrusion A) selon l'une quelconque des revendications 1 à 8, dans lesquelles ladite charge est le talc.

10. Compositions de polyéthylène de revêtement par extrusion D, comprenant 40 à 60 % en poids de la composition de polyéthylène A), selon l'une des revendications 1 à 9, et 60 à 40 % en poids du mélange de polymères B selon la revendication 1 ou 2.

11. Utilisation des compositions de polyéthylène de revêtement par extrusion A selon l'une quelconque des revendications 1 à 9 pour un revêtement par extrusion.

12. Utilisation des compositions de polyéthylène de revêtement par extrusion D selon la revendication 10 pour un revêtement par extrusion.

13. Utilisation selon la revendication 11 ou 12 pour le revêtement par extrusion de substrats choisis parmi une feuille d'aluminium, un film OPP, du papier kraft UG et du carton couché pigmenté.

14. Utilisation selon l'une quelconque des revendications 11 à 13, **caractérisée en ce que** des vitesses linéaires de 500 à 800 m/min sont utilisées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005002744 A
- CA 8200
- EP 1777238 A
- WO 2006074694 A
- EP 1674490 A
- EP 0887379 A1
- WO 2004000899 A
- WO 2004111095 A
- WO 9924478 A
- WO 9924479 A
- WO 0068315 A
- WO 0022040 A

### Non-patent literature cited in the description

- Polyolefine. **Vieweg ; Schley ; Schwarz.** Kunststoff Handbuch. Carl Hanser Verlag, 1969, vol. IV, 39-51
- Rheological characterization of polyethylene fractions. **Heino, E.L. ; Lehtinen, A. ; Tanner J. ; Seppälä, J. ; Neste Oy ; Porvoo, Finland.** Theor. Appl. Rheol., Proc. Int. Congr. Rheol. 1992, vol. 1, 360-362
- The influence of molecular structure on some rheological properties of polyethylene. **Heino, E.L. ; Borealis Polymers Oy ; Porvoo, Finland.** Annual Transactions of the Nordic Rheology Society. 1995